Europäisches Patentamt

European Patent Office

Office européen des brevets

(19)

(11) Veröffentlichungsnummer: **0 034 757**
**B1**

(12) **EUROPÄISCHE PATENTSCHRIFT**

(45) Veröffentlichungstag der Patentschrift:
02.05.85

(21) Anmeldenummer: 81100954.7

(22) Anmeldetag: 11.02.81

(51) Int. Cl.⁴: **C 08 J 5/18, B 29 D 7/00,**
**C 08 G 69/36**

(54) Verfahren zur Herstellung von Polyamidfolien.

(30) Priorität: 21.02.80 DE 3006500

(43) Veröffentlichungstag der Anmeldung:
02.09.81 Patentblatt 81/35

(45) Bekanntmachung des Hinweises auf die Patenterteilung:
02.05.85 Patentblatt 85/18

(84) Benannte Vertragsstaaten:
DE FR GB IT NL SE

(56) Entgegenhaltungen:
FR - A - 1 523 830
FR - A - 1 529 955
US - A - 3 840 497
US - A - 3 926 924
US - A - 3 995 084
US - A - 4 120 928

Die Akte enthält technische Angaben, die nach dem
Eingang der Anmeldung eingereicht wurden und die
nicht in dieser Patentschrift enthalten sind.

(73) Patentinhaber: **BASF Aktiengesellschaft,**
**Carl-Bosch-Strasse 38, D-6700 Ludwigshafen (DE)**

(72) Erfinder: **Reimann, Horst, Dr., Adelheidstrasse 26,**
**D-6520 Worms (DE)**
Erfinder: **Schmidt, Franz, Dr., Trommstrasse 3,**
**6800 Mannheim 1 (DE)**
Erfinder: **Weiss, Hans-Peter, Dr., Pfalzring 75,**
**D-6704 Mutterstadt (DE)**
Erfinder: **Pipper, Gunter, Schlangenthaler Weg 10,**
**D-6702 Bad Duerkheim (DE)**

ACTORUM AG

# Beschreibung

Polyamidfolien finden aufgrund ihrer guten Eigenschaften eine vielfältige Verwendung und gewinnen zunehmend an Bedeutung. Diese Folien werden nach dem Blasfolienverfahren oder zum weitaus grösseren Teil nach dem Flachfolienverfahren hergestellt. Bei der Herstellung von Flachfolien werden die polymeren Ausgangsstoffe in einem Extruder aufgeschmolzen und über eine Breitschlitzdüse als Schmelzefilm auf eine gekühlte Aufnehmerwalze (Chill-Roll-Walze) gegeben, auf der der Film erstarrt. Die so gebildete Folie wird über mehrere Walzen geführt und schliesslich aufgewickelt oder direkt weiterverarbeitet, beispielsweise zu Verbundfolien.

Unter den technisch produzierten Polyamiden besitzt Polyhexamethylendiaminadipat besonders interessante Eigenschaften, wie z.B. hohen Schmelzpunkt, hohe Steifigkeit und ausgezeichnete Transparenz. Andererseits bereitet gerade die Herstellung von Flachfolien aus Polyhexamethylendiaminadipat (PA 66) besondere Schwierigkeiten. Auf den Walzen, insbesondere auf der gekühlten Aufnehmerwalze, und auf der Folie selbst bildet sich bei der Folienherstellung ein Belag, der wahrscheinlich von leichter flüchtigen Bestandteilen des PA 66 herrührt. Dieser Belag verschlechtert mit zunehmender Laufzeit den Wärmeübergang zwischen Walzen und Folie und beeinträchtigt die Oberflächenqualität der Folie und die Gleichmässigkeit der Abkühlung und Erstarrung der Folie. Weitere Nachteile ergeben sich daraus, dass sich der Belag nicht gleichmässig ausbildet und teils auf der Walze, teils auf der Folie haftet. Das führt zu erheblichen Störungen und zu einer ungleichmässigen, fleckigen oder streifigen Folie.

Es ist bereits versucht worden, diese Nachteile zu vermeiden. So kann man z.B. den sich bildenden Walzenbelag während des Betriebs laufend manuell abreiben und damit die ungünstigen Effekte auf ein tragbares Ausmass begrenzen. Diese Massnahme ist jedoch völlig unbefriedigend. Daher werden in der GB-PS 1 224 702, DE-OS 2 149 824 und NL-OS 6 904 417 Massnahmen empfohlen, die eine kontinuierliche und gleichmässige Reinigung der Aufnehmerwalze bewirken sollen. Diese Verfahren sind aber sehr aufwendig und erschweren die für die Folienqualität wichtige gleichmässige Temperierung der gekühlten Aufnehmerwalze.

In der DE-OS 2 450 788 ist ein Verfahren beschrieben, bei dem zur Vermeidung der Nachteile dem Polyamid 66 eine kleine Menge eines Esters eines aliphatischen Alkohols mit 4 bis 10 Kohlenstoffatomen zugefügt wird. Nach Verlassen der Extrusionsdüse verdampft der Ester jedoch teilweise und es kommt zu Geruchsbelästigungen und gewerbehygienisch bedenklicher Beeinträchtigung der Atemluft. Um dies zu vermeiden, müssten rings um die Düse und die Walzen Absaugvorrichtungen installiert werden.

Es wurde nun überraschenderweise gefunden, dass auch ohne solche aufwendigen Massnahmen einwandfreie und gleichmässige Flachfolien mit der Charakteristik von PA 66 störungsfrei hergestellt werden können, wenn man Copolyamide verwendet, die bestehen aus

a) 75–95 Gew.% Hexamethylendiaminadipat und
b₁) 5–25 Gew.% Caprolactam oder
b₂) 5–25 Gew.% Hexamethylendiaminterephthalat.

Durch den geringen Zusatz an Comonomeren bleiben die charakteristischen Eigenschaften des PA 66 erhalten. Da die Terephthalsäure die Adipinsäure isomorph vertreten kann, werden in diesem Fall selbst bei grösseren Zusatzmengen die PA 66-Eigenschaften keinesfalls verschlechtert. Schmelzpunkt und Steifigkeit steigen eher noch an.

Die Herstellung der Copolyamide erfolgt nach bekannten Verfahren durch Polykondensation von Hexamethylendiaminadipat mit den jeweiligen Mengen an Caprolactam oder Hexamethylendiaminterephthalat. Für das erfindungsgemässe Verfahren eignen sich Copolyamide mit einer relativen Viskosität von 2.5 bis 3.5. Dabei ergibt sich die relative Viskosität als Quotient der Durchflusszeiten im Kapillarviskosimeter bei 25 °C von 1%igen Lösungen des Polyamids in 96%iger Schwefelsäure und von reiner 96%iger Schwefelsäure. Der Schmelzpunkt der Copolyamide soll vorzugsweise höher als 240° sein.

Die Copolyamide können auch übliche Additive wie Molekulargewichtsregler, Stabilisatoren gegen Licht, Wärme und Oxidation, sowie Pigmente und Farbstoffe enthalten, ausserdem können bei der Folienherstellung übliche Hilfsmittel wie z.B. Antiblockmittel appliziert werden.

Für die Durchführung des erfindungsgemässen Verfahrens können für die Flachfolienherstellung übliche Anlagen verwendet werden, und die erhaltenen Folien können wie üblich monoaxial oder biaxial gereckt, laminiert, kaschiert oder auf andere Art und Weise weiterverarbeitet werden.

Damit die Gebrauchseigenschaften der Copolyamidfolien das Niveau einer PA 66-Folie erreichen, ist die Menge an Comonomeranteilen so zu wählen, dass der Schmelzpunkt und die Steifigkeit nicht wesentlich verringert werden. Andererseits muss durch eine ausreichende Menge an Comonomerenanteilen eine Belagbildung bei der Extrusion sicher verhindert werden.

Bei Coprolactam als Comonomerbaustein erreicht man dies durch Verwendung einer Menge von 5 bis 25, bevorzugt jedoch 12–18 Gew.%, bezogen auf den Gesamtansatz der Monomeren.

Bei Hexamethylendiaminterephthalat als Comonomerbaustein wird eine etwas höhere Menge von 15 bis 25 Gew.% bevorzugt, da durch den isomorphen Ersatz der Schmelzpunkt nicht abgesenkt wird, Steifigkeit und Glaspunkt jedoch sogar noch erhöht werden. Copolyamide auf dieser Basis haben weiterhin den Vorteil, dass sie sich durch eine stark ausgeprägte Strukturviskosität auszeichnen, so dass beim Extrudieren mit einer stark verringerten Leistungsaufnahme und damit geringerer Schneckenbelastung gearbeitet werden kann. Diese Copolyamide verhalten sich im Scherfeld des Extruders wie ein PA 66 mit niedrigerer rel. Viskosität; nach Verlassen des Extruders und Wegfall des Scherfeldes weisen sie jedoch eine wesentlich höhere Schmelzviskosität auf. Diese Eigenschaft ermöglicht es, höhere Durchsatzleistungen zu erzielen. Die Anwesenheit von Terephthalamid-Gruppen in dem Copolyamid hat ausserdem noch den Vorteil, dass durch die hohe UV-Absorption des Terephthalamids nur noch wenig UV-Licht mit einer Wellenlänge kleiner als ca. 310 nm die Folie durchdringt. Eine solche Copolyamid-Folie ist damit ausgezeichnet geeignet zur transparenten Verpackung von UVempfindlichen Materialien wie z.B. Wurst, Fleisch u.ä.

Durch die erfindungsgemässe Verwendung von Copolyamiden zur Flachfolienherstellung wird auf einfache Art wirkungsvoll die Ausbildung eines störenden Walzenbelages bei der Herstellung von Flachfolien mit PA 66-Charakteristik vermieden. Aufwendige Reinigungsoperationen oder komplizierte und teilweise nachteilige mechanische Vorrichtungen zum kontinuierlichen Reinigen der Walzen erübrigen sich. Ausserdem entfallen Betriebsunterbrechungen zum Zwecke der Walzenreinigung oder des Walzenwechsels. Ferner entfällt das Anbringen einer Absaugvorrichtung, da keine niedermolekularen Stoffe wie beim Verfahren nach DE-OS 2 450 788 abdampfen.

Die erfindungsgemäss erhaltenen Copolyamid-Flachfolien sind überraschenderweise hochtransparent, von hoher Steifigkeit und Temperaturbeständigkeit, frei von Flecken und Streifen und zeichnen sich durch eine sehr hohe Gleichmässigkeit und Konstanz der Foliendicke, der optischen und mechanischen Eigenschaften und der Oberfläche aus. Sie sind vor allem für die Verwendung als Verpackungsfolien geeignet.

Beispiele

Für die Durchführung der Versuche wurde ein Extruder der Firma Barmag mit einem Durchmesser von 90 mm und einer Länge von 25 D verwendet. Der Extruder war mit einer Dreizonenschnecke in einer Aufteilung von 8 D:4 D:13 D ausgerüstet. Das Gangtiefenverhältnis betrug 13 mm:37 mm. Als Breitschlitzdüse wurde eine handelsübliche Düse der Fa. Johnson mit einer Breite von 800 mm und einer Spaltweite von 0,5 mm verwendet. Die Temperaturen in den einzelnen Heizzonen des Extruderzylinders betrugen, beginnend an der Einzugszone: 255 °C, 260 °C, 275 °C, 280 °C, 280 °C, 280 °C, Adapter und Düse wurden bei einer Temperatur von 280 °C gehalten.

Die aufnehmende Kühlwalze hatte einen Durchmesser von 450 mm und wurde bei einer Temperatur von 92 °C gehalten. Die produzierten Folien wurden mit einer Geschwindigkeit von 45 m/min abgezogen. Sie besassen eine Dicke von 40 µm und eine Breite von 650 mm.

Alle verwendeten Homo- und Copolyamide wurden vorher einer Heisswasserextraktion unterworfen, um eventuell noch vorhandene niedermolekulare Anteile zu entfernen und damit den Empfehlungen des Bundesgesundheitsamtes bezüglich des Extraktgehaltes bei Polyamiden zu entsprechen.

1. (Vergleich) Der Extruder wurde mit Polyamid 66 mit einem Schmelzpunkt von 260° und einer relativen Viskosität von 3.23 (gemessen 1%ig in 96%iger Schwefelsäure) beschickt. Mit zunehmender Laufzeit bildet sich auf den Walzen und auf der Folie ein stärkerer Belag aus. Die Folie zeigt nach längerer Laufzeit Ungleichmässigkeiten in der Dicke und Transparenz.

2. Der Extruder wurde mit einem Copolyamid beschickt, das hergestellt wurde aus 85 Gew.-Teilen Hexamethylendiaminadipat und 15 Gew.-Teilen Caprolactam. Das Copolyamid mit einem Schmelzpunkt von 243° wies eine relative Viskosität von 3.39 auf. Auch bei längerer Laufzeit blieben Walzen und Folie belagfrei. Die Folie zeigte gleichmässige Transparenz und Dicke.

3. Der Extruder wurde mit einem Copolyamid aus 80 Gew.-Teilen Hexamethylendiaminadipat und 20 Gew.-Teilen Hexamethylendiaminterephthalat mit einer relativen Viskosität von 2.70 und einem Schmelzpunkt von 262 °C beschickt. Walzen und Folien blieben auch nach längerer Laufzeit belagfrei und die Folie zeigte gleichmässige Transparenz und Dicke.

Bei der Herstellung der Folien wurde die Leistungsaufnahme des Extruders und nach bestimmten Laufzeiten der Folienanlage der Streuwert aus den Folien nach ASTM D 1003 als Mass für die Belagbildung gemessen:

| Beispiel | Leistung (kw) | Streuwert in % nach ASTM D 1003 nach Laufzeit der Folienanlage von | |
| --- | --- | --- | --- |
| | | 30 min | 120 min |
| 1 | 70 | 7,9 | 19,8 |
| 2 | 75 | 6,4 | 6,3 |
| 3 | 57 | 6,1 | 6,2 |

In bezug auf die sonstigen Folieneigenschaften wie Festigkeit, Permeationswerte und für Beispiel 3 auch Wärmestandfestigkeit entsprechen die Copolyamidfolien aus Beispiel 2 und 3 voll der PA 66-Homopolyamidfolie aus Beispiel 1.

**Patentanspruch**

Verfahren zur Herstellung von Folien aus Polyamid durch Aufschmelzen des Polyamids in einem Extruder und Auspressen über eine Breitschlitzdüse auf Walzen oder Band, dadurch gekennzeichnet, dass man ein mit heissem Wasser extrahiertes Polyamid aus

a) 75 bis 95 Gew.-% Hexamethylendiaminadipat und
b1) 5 bis 25 Gew.-% Caprolactam oder
b2) 5 bis 25 Gew.-% Hexamethylendiaminterephthalat

mit einer relativen Viskosität von 2,5 bis 3,5 verwendet.

**Claim**

A process for the production of polyamide sheeting by melting the polyamide in an extruder and extruding it through a sheeting die onto rollers or a belt, wherein there is used a polyamide which has been extracted with hot water, consists of

(a) 75 to 95% by weight of hexamethylenediamine adipate and
(b$_1$) 5 to 25% by weight of caprolactam or
(b$_2$) 5 to 25% by weight of hexamethylenediamine terephthalate,

and has a relative viscosity of from 2.5 to 3.5.

**Revendication**

Procédé de fabrication de feuilles de polyamide par fusion du polyamide dans une extrudeuse et extrusion par une filière plate sur des cylindres ou une bande, caractérisé par le fait que l'on utilise un polyamide, extrait à l'eau chaude, de

a) 75 à 95% en poids d'adipate d'hexaméthylène-diamine et
b1) 5 à 25% en poids de caprolactame ou
b2) 5 à 25% en poids de téréphthalate d'hexaméthylènediamine

d'une viscosité relative de 2,5 à 3,5.